# EUROPEAN PATENT SPECIFICATION

(11) **EP 2 645 156 B1**
(45) Date of publication and mention of the grant of the patent: **29.06.2022**
(21) Application number: 13161165.9
(22) Date of filing: 26.03.2013
(51) Int. Cl.: G02C 7/04, B29D 11/00

(54) **Increased stiffness center optic in soft contact lenses for astigmatism correction**
Mittenoptik mit erhöhter Steifigkeit in weichen Kontaktlinsen zur Astigmatismuskorrektur
Centre optique à rigidité dans des lentilles de contact souples pour corriger l'astigmatisme

(30) Priority: 27.03.2012 US 201213430891
(43) Date of publication of application: 02.10.2013
(73) Proprietor: Johnson & Johnson Vision Care, Inc., Jacksonville, FL 32256 (US)
(72) Inventor: Hansen, Jonathan, Jacksonville, FL 32224 (US); Hawke, Ryan, Jacksonville, FL 32257 (US)
(74) Representative: Carpmaels & Ransford LLP

(56) References cited:
- EP-A2- 0 207 640
- US-A- 4 208 362
- US-A- 4 702 574
- US-A1- 2005 018 130
- Brian Chou: "The Evolution of Silicone Hydrogel Lenses", Contact Lens Spectrum, 6 January 2008 (2008-01-06), XP055062818, Retrieved from the Internet: URL:http://www.clspectrum.com/articleviewe r.aspx?articleid=101744 [retrieved on 2013-05-14]

## Description

### BACKGROUND OF THE INVENTION

### 1. Field of the Invention

The present invention relates to contact lenses having a higher stiffness in the central optic zone relative to the peripheral zone, and more particularly to soft contact lenses incorporating a higher modulus hydrogel material in the central optic zone relative to the peripheral zone for the correction of astigmatic refractive errors as well as possible higher order aberrations created by corneal geometry. The higher modulus hydrogel material creates a stiffer central optic zone relative to the peripheral zone of the contact lenses. Other means and methods may also be utilized to create stiffer central optic zones.

### 2. Discussion of the Related Art

Myopia or nearsightedness is an optical or refractive defect of the eye wherein rays of light from an image focus to a point before they reach the retina. Myopia generally occurs because the eyeball or globe is too long or the shape or contour of the cornea is too steep. A minus powered spherical lens may be utilized to correct myopia. Hyperopia or farsightedness is an optical or refractive defect of the eye wherein rays of light from an image focus to a point after they reach or behind the retina. Hyperopia generally occurs because the eyeball or globe is too short or the shape or contour of the cornea is too flat. A plus powered spherical lens may be utilized to correct hyperopia. Astigmatism is an optical or refractive defect in which an individual's vision is blurred due to the inability of the eye to focus a point object into a focused image on the retina. Unlike myopia and/or hyperopia, astigmatism is unrelated to globe size or corneal steepness, but rather it is caused by a non-rotationally symmetric cornea or from the misalignment or positioning of the crystalline lens. The vast majority of astigmatism occurs due to non-rotationally symmetric corneal curvature. A perfect cornea is rotationally symmetric whereas in most individuals with astigmatism, the cornea is not rotationally symmetric. In other words, the cornea is actually more curved or steeper in one direction than another, thereby causing an image to be stretched out rather than focused to a point. A cylindrical lens or toric contact lens, rather than a spherical lens may be utilized to resolve astigmatism.

Corneal astigmatism may be corrected using a hard or rigid gas permeable contact lens. In this case, a fluid or tear lens may exist between the posterior surface of the rigid contact lens and the cornea. This fluid or tear lens follows or assumes the shape of the back surface of the contact lens. Since the index of refraction of the fluid or tear lens is nearly a match for the cornea, the corneal toricity is optically neutralized or reduced. In these cases, a toric lens will not be required. However, rigid gas permeable contact lenses and hard contact lenses are generally less comfortable than soft or hydrogel contact lenses. Since soft or hydrogel contact lenses wrap around the cornea, a fluid lens is generally not found and the tear fluid more closely resembles a thin film. In this case, a toric lens design is required.

A toric lens is an optical element having two different powers in two orientations that are perpendicular to one another. Essentially, a toric lens has one power, spherical, for correcting myopia or hyperopia and one power, cylinder, for correcting astigmatism built into a single lens. These powers are created with curvatures at different angles which are preferably maintained relative to the eye. Toric lenses may be utilized in eyeglasses, intraocular lenses and contact lenses. The toric lenses used in eyeglasses and intraocular lenses are held fixed relative to the eye thereby always providing optimal vision correction. However, toric contact lenses may tend to rotate on the eye thereby temporarily providing sub-optimal vision correction. Accordingly, currently utilized toric contact lenses also include a mechanism to keep the contact lens relatively stable on the eye when the wearer blinks or looks around. For many high order aberrations, many of which are not rotationally symmetric, positional stability is also required to provide optimal vision correction.

When a toric contact lens is first placed in the eye, it must automatically position or auto-position itself and it then maintains that position over time. However, once the toric contact lens is positioned, it tends to rotate on the eye due to the force exerted on the contact lens by the eyelids during blinking as well as eyelid and tear fluid movement. Maintenance of the on-eye orientation of a toric contact lens is generally accomplished by altering the mechanical characteristics of the toric contact lens. For example, prism stabilization, including decentering of the contact lens' front surface relative to the back surface, thickening of the inferior contact lens periphery, forming depressions or elevations on the contact lens' surface, and truncating the contact lens edge are all methods that have been utilized.

Each of more traditional stabilization techniques have advantages and disadvantages associated therewith. The main disadvantage of these types of designs is that they rely on the interaction of the eyelids and the contact lens' thickness differential to orient the contact lens to the correct location on the wearer's eye. The problem is particularly acute with plus powered toric contact lenses intended for hyperopia. US2005018130A1 relates to hybrid contact lenses.

Accordingly, it would be advantageous to design contact lenses, including toric contact lenses, that correct for astigmatism as well as possible higher order aberrations caused by corneal geometry with less reliance on specific on-eye orientation and therefore less or no stabilization means.

### SUMMARY OF THE INVENTION

The invention is defined by the appended claims. The higher stiffness center optic contact lens design of the present invention overcomes a number of disadvantages associated with orientating and maintaining the orientation of toric contact lenses on a wearer's eye while providing visual acuity correction. The higher stiffness central optic zone contact lens may be achieved in a number of ways, including the addition of a material in the central optic zone having a higher modulus of elasticity than the surrounding material. In order to maintain its position in the central optic region, the higher modulus material is immiscible with the surrounding material.

In accordance with one aspect, the present invention is directed to an ophthalmic device. The ophthalmic device comprising a contact lens having a central optic zone and a peripheral zone surrounding the central optic zone, the contact lens being formed from a first material having a first modulus of elasticity, the first material being incorporated into the peripheral zone, and a second material incorporated into the central optic zone of the contact lens, the central optic zone having a second modulus of elasticity, wherein the second modulus of elasticity is greater than the first modulus of elasticity; further comprising an intermediate zone located between the central optic zone and the peripheral zone, wherein the central optic zone and the peripheral zone are smoothly blended in the intermediate zone; wherein the first material is formed from curing a first monomer and the second material is formed from curing a second monomer, wherein the first and second monomers are immiscible; and wherein there is a slight blending of the two materials in the intermediate zone changing the stiffness of the lens gradually outside the optic zone, as a function of position from the center of the contact lens.

In accordance with another aspect, the present invention is directed to a method of making the ophthalmic device of the invention. The method comprising dosing the second monomer, which upon curing forms the second material having the second modulus of elasticity, into a center portion of a contact lens front curve mold, dosing the first monomer, which upon curing forms the first material having the first modulus of elasticity, into the contact lens front curve mold on top of the second monomer, wherein the second modulus of elasticity is greater than the first modulus of elasticity, and wherein the first and second monomers are immiscible, and positioning a contact lens back curve mold on the first monomer; and curing the first and second monomers thereby forming the ophthalmic device.

Throughout the specification, the term stiffness should be understood to be a function of the elastic modulus of the material, the thickness of the material, the shape of the material, and any tension or stress built into the material. Accordingly, for a given shape and a given thickness, a material with a higher modulus of elasticity will be stiffer than one with a lower modulus of elasticity.

The present invention is directed to a contact lens having an increased stiffness in the optic zone. This increased stiffness optic zone may be achieved in a number of ways, including utilizing a monomer which upon curing forms a material with a higher modulus of elasticity than the bulk material forming the contact lens in the optic zone, utilizing a suitable additive for raising the modulus of elasticity in the optic zone, by manufacturing the contact lens with specific processes such as varying cure light intensity across the lens thereby causing an increase in the stiffness of the center of the lens, or by pre-tensioning of the contact lens to create resistance to deformation when placed on-eye. By having a stiffer optical zone, the optic zone vaults over or does not conform to the astigmatic geometry of the cornea while the remaining portion of the contact lens does. This vaulting or lack of conformation allows a tear or fluid lens to form between the cornea and the optic zone. This tear or fluid lens follows or assumes the shape of the back surface of the contact lens, which is rotationally symmetric or contains cylinder correction smaller than the corneal astigmatism. Since tears have substantially the same index of refraction as that of the cornea, the fluid lens and the contact lens combination forms an optic surface or element that corrects all or a portion of the visual deficit or refractive error caused by the corneal geometry. In other words, since the index of refraction of the fluid or tear lens is nearly a match for the cornea, the corneal toricity is optically neutralized or reduced when combined with the contact lens optics.

The contact lens of the present invention may be manufactured utilizing any suitable process without a significant increase in expense or complexity. This design may be implemented in any number or type of soft contact lenses. The manufacturing process may simply involve adding a material to the mold in the central optic region which has an elastic modulus higher than that of the remaining material forming the contact lens and which is immiscible or poorly miscible with the remaining material forming the contact lens such that it remains fixed in the center region. Alternatively or in addition, the increased stiffness central optic zone may be manufactured by varying the cure light intensity across the contact lens and pre-tensioning the contact lens to create resistance to deformation.

### BRIEF DESCRIPTION OF THE DRAWINGS

The foregoing and other features and advantages of the invention will be apparent from the following, more particular description, as illustrated in the accompanying drawings.
Figure 1 is a planar view of a contact lens in accordance with the present invention.
Figure 2 is a diagrammatic representation of the steps to manufacture a contact lens in accordance with the present invention.

### DETAILED DESCRIPTION

Contact lenses or contacts are simply lenses placed on the eye. Contact lenses are considered medical devices and may be worn to correct vision and/or for cosmetic or other therapeutic reasons. Contact lenses have been utilized commercially to improve vision since the 1950s. Early contact lenses were made or fabricated from hard materials, were relatively expensive and fragile. In addition, these early contact lenses were fabricated from materials that did not allow sufficient oxygen transmission through the contact lens to the conjunctiva and cornea which potentially could cause a number of adverse clinical effects. Although these contact lenses are still utilized, they are not suitable for all patients due to their poor initial comfort. Later developments in the field gave rise to soft contact lenses, based upon hydrogels, which are extremely popular and widely utilized today. Specifically, silicone hydrogel contact lenses that are available today combine the benefit of silicone, which has extremely high oxygen permeability, with the proven comfort and clinical performance of hydrogels. Essentially, these silicone hydrogel based contact lenses have higher oxygen permeabilities and are generally more comfortable to wear than the contact lenses made of the earlier hard materials. However, these new contact lenses are not totally without limitations.

Currently available contact lenses remain a cost effective means for vision correction. The thin plastic lenses fit over the cornea of the eye to correct vision defects, including myopia or nearsightedness, hyperopia or farsightedness, astigmatism, i.e. asphericity in the cornea, and presbyopia i.e. the loss of the ability of the crystalline lens to accommodate. Contact lenses are available in a variety of forms and are made of a variety of materials to provide different functionality. Daily wear soft contact lenses are typically made from soft polymer-plastic materials combined with water for oxygen permeability. Daily wear soft contact lenses may be daily disposable or extended wear disposable. Daily disposable contact lenses are usually worn for a single day and then thrown away, while extended wear disposable contact lenses are usually worn for a period of up to thirty days. Colored soft contact lenses use different materials to provide different functionality. For example, a visibility tint contact lens uses a light tint to aid the wearer in locating a dropped contact lens, enhancement tint contact lenses have a translucent tint that is meant to enhance one's natural eye color, the color tint contact lens comprises a darker, opaque tint meant to change one's eye color, and the light filtering tint contact lens functions to enhance certain colors while muting others. Rigid gas permeable hard contact lenses are made from silicone polymers but are more rigid than soft contact lenses, do not contain water, and thus hold their shape and are more durable, but generally less comfortable. Bifocal contact lenses are designed specifically for patients with presbyopia and are available in both soft and rigid varieties. Toric contact lenses are designed specifically for patients with astigmatism and are also available in both soft and rigid varieties. Combination lenses combining different aspects of the above are also available, for example, hybrid contact lenses.

For purposes of the present invention a contact lens is defined by at least two distinct regions. The inner region or optical zone from which the vision correction is obtained and the outer peripheral zone of the contact lens that provides mechanical stability of the contact lens on eye. An intermediate zone or region is located between the inner optical zone and the outer peripheral zone and is used for blending the two aforementioned zones in a smooth manner such that discontinuities do not occur. A contact lens is also defined by a front surface or surface power, a back curve or base curve and an edge.

The inner region or optical zone provides vision correction and is designed for a specific need such as single vision myopia or hyperopia correction, astigmatism vision correction, bi-focal vision correction, multi-focal vision correction, custom correction or any other design that may provide vision correction. The outer periphery or peripheral zone provides mechanical features which influence positioning and stabilization of the contact lens on the eye including, centration and orientation. Orientation stabilization is fundamental when the optical zone includes non-rotationally symmetric features, such as astigmatic correction and/or high order aberrations correction. The intermediate region or zone ensures that the optical zone and the peripheral zone are smoothly blended. It is important to note that both the optical zone and the peripheral zone may be designed independently, though sometimes their designs are strongly related when particular requirements are necessary. For example, the design of a toric lens with an astigmatic optical zone might require a particular peripheral zone for maintaining the contact lens at a predetermined orientation on the eye.

Toric contact lenses have different designs than spherical contact lenses. The optical zone portion of toric contact lenses has two powers, spherical and cylindrical, created with curvatures generally at right angles to each other. The powers are required to maintain position at the specific angle, cylinder axis, on the eye to provide the required astigmatic vision correction. The mechanical or outer peripheral zone of toric contact lenses typically comprises a stabilization means to properly rotate and orient the cylindrical or astigmatic axis into position while being worn on the eye. Rotating the contact lens to its proper position when the contact lens moves, or when the contact lens is inserted is important in producing a toric contact lens.

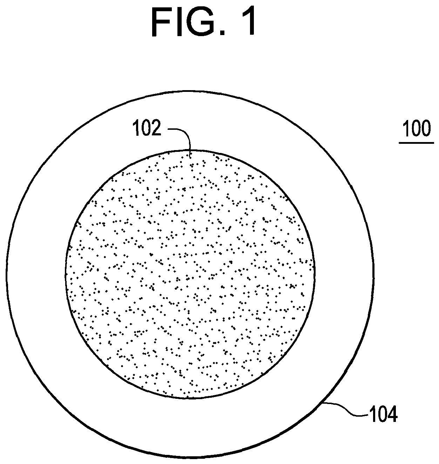

Referring now to Figure 1, there is illustrated a planar view of an exemplary contact lens design or construct in accordance with the present invention. The contact lens 100 comprises an optic zone 102 and a peripheral zone 104 surrounding the optic zone 102. This arrangement or configuration is a standard contact lens design. In accordance with the present invention; however, the optic zone 102 is modified, as detailed subsequently, to be stiffer than the surrounding region; namely, the peripheral zone 104. The optic zone 102 may be made stiffer than the peripheral zone 104 via a number of methods and means as is discussed subsequently. The stiffer optic zone 102 may be achieved utilizing a material with a higher modulus of elasticity or higher elastic modulus in the optic zone 102 than the material in the peripheral zone 104. In addition to being of higher elastic modulus, the material in the optic zone 102 is preferably immiscible or poorly miscible with that of the surrounding material such that it remains fixed in position. A material with a higher elastic modulus is stiffer than a material with a lower elastic modulus. The stiffness of a component, element and/or part determines how much it will deflect under a given load. The more stiff a material is, the higher the load required to elastically deform it; however, it is important to note that the stiffness of an element is also a function of the material thickness as well as the shape of the element. Accordingly, for a given shape and thickness, the higher the modulus of elasticity, the greater the stiffness. With this type of design, astigmatic correction may be achieved via an increase in the contact lens stiffness for a rotationally or non-rotationally symmetric optic zone, in order to optically neutralize or reduce the effect of corneal astigmatism, by providing for the central optic or optic zone 102 of the contact lens 100 to vault over the astigmatic geometry of the cornea. In other words, the optic zone 102 vaults over, or does not conform to, the astigmatic geometry of the cornea while the peripheral zone 104 remains in contact with the eye such that a thicker tear fluid lens forms between the cornea and the optic zone 102. Since tears have substantially the same index of refraction as that of the cornea, the tear fluid lens and the contact lens combination form an optic surface or element that corrects the visual deficit or refractive error caused by the corneal geometry. In other words, given that the index of refraction of the fluid or tear lens is nearly a match for the cornea; the corneal toricity is optically neutralized or reduced when combined with the contact lens optics. An advantage of the present invention is that in reducing or eliminating the need for the contact lens to contain non-rotationally symmetric optical correction, the stabilization features may be reduced in size or eliminated, thereby providing a more comfortable lens.

Based upon the specific stiffness achieved through this concept and the flexure of the high modulus hydrogel contact lens optic zone in combination with the specific lens geometry, for example, spherical, aspheric and/or toric, on top of an astigmatic corneal geometry, a contact lens designed in this manner may be utilized for the correction of low levels of astigmatism and also may be selectively utilized to enhance vision for higher amounts of astigmatism as well as any possible higher order aberrations created by corneal geometry. Accordingly, the present invention utilizes a contact lens with a specific prescription, but formed with an optic zone formed from a higher elastic modulus hydrogel material to correct optical defects with reduced or no need to maintain the lens rotationally aligned if rotational alignment would normally be required.

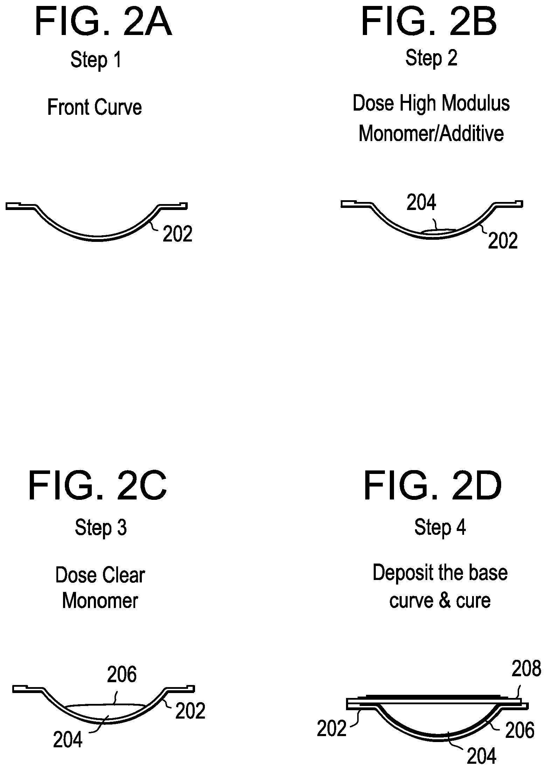

In order to realize this design, the optic zone 102 preferably comprises a material with higher modulus of elasticity and which is immiscible with or poorly miscible with the remaining material. Micro-dosing technology may be utilized to fabricate or manufacture a contact lens 100 having an optic zone 102 with a higher modulus of elasticity than the surrounding lens. Figures 2A-2D illustrates an exemplary process utilizing micro-dosing technology. In a first step, a standard front curve 202 for a given prescription is positioned to accept the material for forming a contact lens. In a second step, a small drop of high elastic modulus clear monomer or clear additive to increase elastic modulus is dosed into the center portion of the contact lens front curve mold 202. In a third step, a second lower modulus monomer 206, for example, etafilcon, galyfilcon, senofilcon or narafilcon, is dosed on top of the high modulus monomer or additive 204. It is important to note that any suitable material for forming soft contact lenses may be utilized in accordance with the present invention. It is also important to note that the high elastic modulus material 204 and the low elastic modulus material 206 are immiscible or poorly miscible. In a fourth step, the contact lens mold is closed by the deposition of the base curve mold 208. The closed mold is then positioned so that the monomers may be cured into a final contact lens with a central optic or optic zone having a higher modulus of elasticity as is set forth above.

The materials set forth above for the bulk of the contact lens, including etafilcon, galyficon, senofilcon and narafilcon are silicone hydrogels that are currently utilized in the fabrication of soft contact lenses. Other silicone hydrogels include lotrafilcon, balafilcon, vifilcon and omafilcon. These materials typically have a low modulus of elasticity, for example, etafilcon A has a Young's modulus of about 0.3 x 10⁶ Pa, galyfilcon A has a Young's modulus of about 0.43 x 10⁶ Pa, senofilcon A has a Young's modulus of about 0.72 x 10⁶ Pa, balafilcon A has a Young's modulus of about 1.1 x 10⁶ Pa, and lotrafilcon A has a Young's modulus of about 1.4 x 10⁶ Pa. The materials for the central optic preferably have a higher modulus of elasticity and are immiscible or poorly miscible with the material in the peripheral zone thereby allowing it to remain a bi-material contact lens. Exemplary materials include a silicone-based hydrogel in the center and a HEMA-based hydrogel in the periphery, which may be made poorly miscible and remain separated. Alternatively, one or more additives, including crosslinkers such as TEGDMA, may be added to the bulk material forming the contact lens in the central optic region to raise the modulus of elasticity in that region.

The more rigid or stiffer optical zone 102 materials and the less stiff peripheral 104 lens material do not have a distinct transition, as there is a slight blending of the two materials during assembly. This means that the stiffness of the lens 100 changes gradually outside the optic zone, as a function of position from the center of the contact lens. Furthermore, the stiff optic zone 102 material would be continuous from the front surface of the central optic to the back surface of the central optic of the contact lens. This is different from a hybrid contact lens which encapsulates a rigid lens insert, inside of a soft lens material shell and has a distinct transition from stiff optic zone to softer periphery. This is also different from a skirted rigid gas permeable contact lens (RGP), since the periphery of the contact lens is not molded onto a rigid central optic, but rather the two materials are molded together, creating one non-homogenous soft contact lens.

It is important to note that any suitable biocompatible materials may be utilized to create the higher elastic modulus optic zone. The materials are preferably clear, are compatible with the monomer comprising the bulk of the contact lens and have the same index of refraction. Existing processes for forming contact lenses may be easily modified to manufacture contact lenses in accordance with the present invention. Viscosity differences in optic zone and periphery monomers may be used to maintain separation during the lens manufacturing process, such as in using a higher viscosity central monomer that does not flow outwards to the periphery when the lens mold is closed. Consideration must be made to the shrinkage and expansion rates of both materials in order to form an acceptable lens.

A stiffer optic zone may be achieved through a controlled, but varied curing process. For example, by varying the cure light intensity across the contact lens, varying stiffness's may be realized in different regions. Accordingly, by selective curing, a stiffer optic zone relative to the peripheral zone may be achieved.

In addition to using a bi-material contact lens with differences in Young's modulus in the center and periphery or selective curing as described above, pre-tensioning of the lens may also create resistance to deformation when placed on-eye. A pre-tensioned lens will require more force to deform as the internal tension must be overcome along with the elastic force from the modulus, lens shape, and lens thickness. Methods of manufacturing pre-tensioned lenses include varying the reaction rate, such as by introducing different levels of oxygen or another reaction inhibitor, to the front and back surfaces of the lens molds. The result is a lens that, intact maintains a "dome" shape, but if cross-sectioned will tend to curl or flatten. In addition to exposing the entire front and back mold surfaces to different oxygen levels, the concentration of oxygen or another inhibitor may be varied across both front and back surfaces, creating a custom tension or stress profile through the lens.

The basic premise behind this pre-tensioning process is that different plastic mold materials absorb oxygen or other reaction inhibitors at different rates and retain the oxygen or other reaction inhibitors with different affinities. By utilizing different materials to form the front and back curve molds or selectively exposing the front and/or back curve molds to oxygen or other reaction inhibitors, the reaction rate may be changed thereby inducing stresses in the contact lens. For example, polypropylene readily absorbs oxygen while zeonor and polystyrene absorb significantly less. Accordingly, by utilizing polystyrene for the front curve mold and polypropylene for the back curve mold, with equal access to oxygen, the back curve mold will absorb more oxygen than the front curve mold and thus the monomer in contact with this surface will have different properties, creating a differential stress between the front and back surfaces of the contact lens. The concentration of the oxygen or other reaction inhibitors may be further manipulated by controlling at least one of, all of, or any combination of time, temperature, concentration and pressure of the medium (environment) surrounding the front and back curve mold surfaces. In addition, concentration of absorbed oxygen or other reaction inhibitors may be varied across the surface, such as by masking the part prior to exposure or selectively removing absorbed gases.

Providing that the corneal astigmatism is effectively reduced per this design with a rotationally symmetric optic due to the increased stiffness of the soft contact lens by means of the increased modulus of elasticity in the central optic or optic zone or by any other suitable means such as varying cure light intensity and pre-tensioning of the contact lens as described in detail herein, the contact lens would not require any specific on eye orientation and therefore less or no mechanical stabilization for the contact lens. If corneal astigmatism and/or high order aberrations are reduced, but not made negligible, mechanical stabilization may still be required, but variations in lens position will have a smaller impact on visual quality. As set forth above, an advantage of the present invention is that the stabilization features may be reduced in size or substantially eliminated, thereby providing a more comfortable contact lens. The present invention offers a simple and elegant solution for the correction of astigmatism.

Although shown and described is what is believed to be the most practical and preferred embodiments, it is apparent that departures from specific designs and methods described and shown will suggest themselves to those skilled in the art and may be used without departing from the scope of the claims.

The present invention is not restricted to the particular constructions described and illustrated, but should be constructed to cohere with all modifications that fall within the scope of the appended claims

## Claims

1. A contact lens (100) having a central optic zone (102) and a
peripheral zone (104) surrounding the central optic zone, the contact lens being formed from a first material having a first modulus of elasticity, the first material being incorporated into the peripheral zone; and
a second material incorporated into the central optic zone of the contact lens, the central optic zone having a second modulus of elasticity, wherein the second modulus of elasticity is greater than the first modulus of elasticity; wherein the first material is formed from curing a first monomer and the second material is formed from curing a second monomer;
**characterized in that** the contact lens further comprises an intermediate zone located between the central optic zone and the peripheral zone, wherein the central optic zone and the peripheral zone are smoothly blended in the intermediate zone; wherein the first and second monomers are immiscible; and
wherein there is a slight blending of the two materials in the intermediate zone changing the stiffness of the lens gradually outside the optic zone, as a function of position from the center of the contact lens.

2. The contact lens according to claim 1, wherein the contact lens comprises a soft contact lens.

3. The contact lens according to claim 1 or claim 2, wherein the contact lens comprises a toric contact lens.

4. The contact lens according to any of claims 1-3, wherein the first monomer comprises etafilcon.

5. The contact lens according to any of claims 1-3, wherein the first monomer comprises galyfilcon.

6. The contact lens according to any of claims 1-3, wherein the first monomer comprises senofilcon.

7. The contact lens according to any of claims 1-3, wherein the first monomer comprises narafilcon.

8. The contact lens according to any of claims 1-7, wherein the second material is continuous from the front surface of the central optic zone to the back surface of the central optic zone of the contact lens.

9. A method of making the contact lens of any preceding claim, the method comprising:
dosing the second monomer (204) into a center portion of a contact lens front curve mold (202);
dosing the first monomer (206) into the contact lens front curve mold on top of the second monomer,
positioning a contact lens back curve mold (208) on the first monomer; and
curing the first and second monomers thereby forming the contact lens .

## Patentansprüche

1. Kontaktlinse (100) mit einer zentralen optischen Zone (102) und einer peripheren Zone (104), welche die zentrale optische Zone umgibt, wobei die Kontaktlinse gebildet ist aus
einem ersten Material mit einem ersten Elastizitätsmodul, wobei das erste Material in die periphere Zone eingebaut ist; und
einem zweiten Material, das in die zentrale optische Zone der Kontaktlinse eingebaut ist, wobei die zentrale optische Zone einen zweiten Elastizitätsmodul aufweist, wobei der zweite Elastizitätsmodul größer als der erste Elastizitätsmodul ist;
wobei das erste Material durch Härten eines ersten Monomers gebildet wird und das zweite Material durch Härten eines zweiten Monomers gebildet wird; **dadurch gekennzeichnet, dass** die Kontaktlinse des Weiteren eine Zwischenzone umfasst, die sich zwischen der zentralen optische Zone und der peripheren Zone befindet, wobei die zentrale optische Zone und die periphere Zone sich übergangslos mit der Zwischenzone vermengen; wobei das erste und das zweite Monomer unmischbar sind; und
wobei es ein geringfügiges Vermengen der beiden Materialien in der Zwischenzone gibt, wodurch die Steifheit der Linse graduell außerhalb der optischen Zone als Funktion der Position von der Mitte der Kontaktlinse aus geändert wird.

2. Kontaktlinse nach Anspruch 1, wobei die Kontaktlinse eine weiche Kontaktlinse umfasst.

3. Kontaktlinse nach Anspruch 1 oder Anspruch 2, wobei die Kontaktlinse eine torische Kontaktlinse umfasst.

4. Kontaktlinse nach einem der Ansprüche 1 bis 3, wobei das erste Monomer Etaflicon umfasst.

5. Kontaktlinse nach einem der Ansprüche 1 bis 3, wobei das erste Monomer Galyfilcon umfasst.

6. Kontaktlinse nach einem der Ansprüche 1 bis 3, wobei das erste Monomer Senofilcon umfasst.

7. Kontaktlinse nach einem der Ansprüche 1 bis 3, wobei das erste Monomer Narafilcon umfasst.

8. Kontaktlinse nach einem der Ansprüche 1 bis 7, wobei das zweite Material von der Vorderfläche der zentralen optischen Zone zu der hinteren Fläche der zentralen optischen Zone der Kontaktlinse durchgehend ist.

9. Verfahren zur Fertigung der Kontaktlinse nach einem der vorhergehenden Ansprüche, wobei das Verfahren umfasst:
Dosieren des zweiten Monomers (204) in einen zentralen Abschnitt einer Vorderkrümmungsform (202) einer Kontaktlinse;
Dosieren des ersten Monomers (206) in die Vorderkrümmungsform der Kontaktlinse oben auf das zweite Monomer,
Positionieren einer Hinterkrümmungsform (208) der Kontaktlinse auf dem ersten Monomer; und
Härten des ersten und des zweiten Monomers, wodurch die Kontaktlinse gebildet wird.

## Revendications

1. Lentille de contact (100) possédant une zone optique centrale (102) et une zone périphérique (104) entourant la zone optique centrale, la lentille de contact étant formée à partir d'un premier matériau possédant un premier module d'élasticité, le premier matériau étant incorporé dans la zone périphérique, et
un deuxième matériau incorporé dans la zone optique centrale de la lentille de contact, la zone optique centrale possédant un deuxième module d'élasticité, le deuxième module d'élasticité étant plus grand que le premier module d'élasticité ;
le premier matériau étant formé par durcissement d'un premier monomère et le deuxième matériau étant formé par durcissement d'un deuxième monomère ;
**caractérisée en ce que** la lentille de contact comprend en outre une zone intermédiaire située entre la zone optique centrale et la zone périphérique, la zone optique centrale et la zone périphérique étant mélangées harmonieusement dans la zone intermédiaire ; les premier et deuxième monomères étant immiscibles ; et
il existe un léger mélange des deux matériaux dans la zone intermédiaire modifiant la rigidité de la lentille graduellement à l'extérieur de la zone optique, en fonction d'une position depuis le centre de la lentille de contact.

2. Lentille de contact selon la revendication 1, la lentille de contact comprenant une lentille de contact souple.

3. Lentille de contact selon la revendication 1 ou la revendication 2, la lentille de contact comprenant une lentille de contact torique.

4. Lentille de contact selon l'une quelconque des revendications 1 à 3, le premier monomère comprenant de l'etafilcon.

5. Lentille de contact selon l'une quelconque des revendications 1 à 3, le premier monomère comprenant du galyfilcon.

6. Lentille de contact selon l'une quelconque des revendications 1 à 3, le premier monomère comprenant du senofilcon.

7. Lentille de contact selon l'une quelconque des revendications 1 à 3, le premier monomère comprenant du narafilcon.

8. Lentille de contact selon l'une quelconque des revendications 1 à 7, le deuxième matériau étant continu depuis la surface avant de la zone optique centrale vers la surface arrière de la zone optique centrale de la lentille de contact.

9. Procédé de fabrication de la lentille de contact selon une quelconque revendication précédente, le procédé comprenant :
l'ajout du deuxième monomère (204) dans une partie centrale d'un moule de courbe avant (202) de lentille de contact ;
l'ajout du premier monomère (206) dans le moule de courbe avant de lentille de contact au-dessus du deuxième monomère,
le positionnement d'un moule de courbe arrière (208) de lentille de contact sur le premier monomère ; et
le durcissement des premier et deuxième monomères formant ainsi la lentille contact.
